# EUROPÄISCHE PATENTSCHRIFT

(11) **EP 0 355 643 B1**
(45) Veröffentlichungstag und Bekanntmachung des Hinweises auf die Patenterteilung: **14.04.1993**
(21) Anmeldenummer: 89114976.7
(22) Anmeldetag: 12.08.1989
(51) Int. Cl.: G01F 23/28

(54) **Verfahren zur Erkennung der Überflutung einer Oberfläche**
Process for sensing the flooding of a surface
Procédé de détection de l'inondation d'une surface

(30) Priorität: 25.08.1988 DE 3828821
(43) Veröffentlichungstag der Anmeldung: 28.02.1990
(73) Patentinhaber: BAYER AG, 51368 Leverkusen (DE)
(72) Erfinder: Dedden, Hubert, D-5220 Waldbröl-Hermesdorf (DE); Gieger, Eckhard, D-5090 Leverkusen (DE); Lauer, Christian, Dr., D-5000 Köln 50 (DE)

(56) Entgegenhaltungen:
- EP-A- 0 014 301
- DE-A- 3 324 967

## Beschreibung

Die Erfindung betrifft ein Verfahren zur Erkennung des Ein- oder Auftauchpunktes eines festen oder porösen Körpers in oder aus einer Flüssigkeit. Das zuletzt genannte Prozeßkriterium spielt in der chemischen Verfahrenstechnik eine wichtige Rolle, wenn bei Flüssig-Fest-Trennvorgängen, wie z.B. Dekantieren, Filtrieren, Abnutschen, der Zeitpunkt des Eintritts des Flüssigkeitsspiegels in den Feststoffkuchen möglichst exakt erfaßt werden soll. Man kann dann z.B. die Behandlung des Filterkuchens mit einer Wasch-oder Konditionierflüssigkeit in gezielter Weise durchführen. "Gezielt" bedeutet dabei, daß die Waschflüssigkeitsmenge minimiert und andererseits eine Übertrocknung des Feststoffes vermieden wird.

Weiterhin soll beim Füllen oder Entleeren von Behältern die Über- oder Unterschreitung eines bestimmten Flüssigkeitsniveaus erkannt werden.

### Stand der Technik

Zur Abtastung von Flüssigkeitsspiegeln sind Ultraschall-Laser- und radiometrische Sensoren bekannt. Diese sind jedoch in erster Linie als Flüssigkeitsstandanzeiger konzipiert und liefern bei der Überflutung einer Oberfläche oder dem Durchgang einer Flüssigkeit durch eine Feststoffoberfläche kein ausreichendes Meßsignal.

### Aufgabe

Hier setzt die Erfindung an. Für die chemische Industrie soll ein universeller Sensor zur Erkennung der Überflutung einer Oberfläche oder des Durchgangs eines Flüssigkeitsspiegels durch eine Feststoffoberfläche entwickelt werden, der unabhängig von den nachfolgenden Verfahrens-Parametern und Kriterien zuverlässig und sicher arbeitet:
a) Physikalische und chemische Eigenschaften der eingesetzten Produkte, wie z.B. Farbe, Korngröße, Zusammensetzung von Feststoff bzw. Flüssigkeit,
b) Höhe des Feststoffes und der Flüssigkeit im Behälter,
c) geometrische Vorgaben hinsichtlich des Behälters und eventueller darin befindlicher Einbauten.

Diese Aufgabe wird erfindungsgemäß dadurch gelöst,
a) daß in der Flüssigkeit Oberflächenwellen erzeugt werden,
b) daß die Flüssigkeitsoberfläche beleuchtet und das reflektierte Licht fotoelektrisch abgetastet wird,
c) daß nur die Wechsellichtkomponente des reflektierten Lichts erfaßt wird
d) und daß das gleichgerichtete Wechsellichtsignal mit einem voreingestellten Schwellenwert verglichen und bei Unter- bzw. Überschreitung des Schwellenwertes ein Steuersignal erzeugt wird.

Die Wellenlänge des verwendeten Meßlichts kann im sichtbaren Bereich, aber auch im UV- oder im IR-Bereich liegen.

Zur Erfassung der Wechsellichtkomponente wird zweckmäßig das fotoelektrische Abtastsignal zeitlich differenziert.

Vorteilhaft wird die Flüssigkeitsoberfläche an mehreren Stellen fotoelektrisch abgetastet und die entsprechenden gleichgerichteten Wechsellichtkomponenten aufsummiert. Der gebildete Summenwert wird dann, wie oben beschrieben, mit dem voreingestellten Schwellenwert verglichen.

Es hat sich in der Praxis gezeigt, daß dieses Sensorprinzip so empfindlich ist, daß die in einem chemischen Produktionsbetrieb normalerweise vorhandenen Gebäudeschwankungen und Vibrationen der chemischen Anlagenteile bereits ausreichen, um die Flüssigkeitsoberfläche in Schwingungen zu versetzen und hinreichend starke Oberflächenwellen zu erzeugen. Für den Fall, daß solche Störungen nicht vorhanden sind bzw. zu schwach sind, um Oberflächenwellen hinreichender Amplitude zu erzeugen, muß die Flüssigkeitsoberfläche zu Schwingungen angeregt werden. Zu diesem Zweck kann die Flüssigkeitsoberfläche, z.B. mit Hilfe einer Tropfeinrichtung, durch regelmäßig auftreffende Tropfen in Schwingungen versetzt werden oder durch eine Düse angeblasen werden.

Zur Abtastung und Erfassung eines Flüssigkeitsniveaus in einem Behälter wird eine Platte oder ein plattenähnlich gestalteter Körper im Behälter auf das Sollniveau der Flüssigkeit gebracht und kann dann als Bezugsniveau für die Flüssigkeit, z.B. bei Füll- oder Entleervorgängen des Behälters,verwendet und das bei der Überflutung der Plattenoberfläche auftretende fotoelektrische Steuersignal zum Abbruch des Füll- bzw. Entleervorganges benutzt werden.

Vorzugsweise wird das erfindungsgemäße Verfahren in Verbindung mit Filtrier- oder Nutschprozessen eingesetzt. Dabei wird das beim Durchgang des Flüssigkeitsspiegels durch die Filterkuchenoberfläche auftretende Steuersignal dazu benutzt, um den Filtratablauf zu unterbrechen, um anschließend eine Durchströmung des Filterkuchens mit Waschflüssigkeit einzuleiten.

Die Vorrichtung zur Verwendung beim oben beschriebenen Sensorverfahren einschließlich seiner Varianten besteht erfindungsgemäß aus einer Lichtquelle zur Beleuchtung der Flüssigkeitsoberfläche, einem Objektiv zur Abbildung der beleuchteten Oberfläche mehreren Fotodetektoren zur Erfassung des an der Flüssigkeitsoberfläche reflektierten Lichts, einer Auswerteschaltung mit Differenziergliedern zur zeitlichen Differentiation der an den Fotoempfängern anstehenden Signale, den Fotoempfängern zugeordneten Gleichrichtern mit einer Summationsschaltung zur Bildung der Summe aller gleichgerichteten Fotoempfängersignale, und einer Komparatorschaltung, die ein Steuersignal abgibt, wenn die Summe der Fotoempfängersignale einen voreingestellten Schwellwert unter- oder überschreitet.

### Vorteile

Das erfindungsgemäße Sensorverfahren erlaubt eine eindeutige Unterscheidung zwischen flüssiger und fester Phase und liefert damit eine charakteristische Merkmalsklassifizierung zur Erkennung des Zeitpunktes für den Eintritt der Flüssigkeitsoberfläche in einen Feststoffkuchen oder die Überflutung einer Oberfläche. Die besonderen Vorzüge der Erfindung liegen in ihrem verfahrenstechnischen Nutzen, weil damit eine Lücke bei der automatischen Steuerung von Filtrier- und Nutschvorgängen beseitigt wird. Besondere Bedeutung kommt dabei der Durchströmungswäsche zu, bei der die Mutterlauge mit Waschflüssigkeit aus dem Filterkuchen verdrängt wird, ohne daß der Kuchen vorher trockengeblasen wurde.

Wenn beim Entfeuchten vor der Durchströmungswäsche keine Rißbildung im Filterkuchen aufgetreten ist, läßt sich die Kuchenwäsche - bei gleichem Waschergebnis - mit nur Bruchteilen der Waschflüssigkeitsmenge durchführen, wie sie bei Filterkuchen mit Rißbildung erforderlich wäre. Beim Filtrieren in Rührwerksdrucknutschen besteht wegen der Größe der Filterfläche besonders die Gefahr der Rißbildung. Solche Risse können nun mit dem erfindungsgemäßen Verfahren vermieden werden, da nunmehr das Abfließen von Filtrat in dem Moment unterbrochen wird, wo die gesamte Kuchenoberfläche gerade aus der Flüssigkeit auftaucht. Da die Rißbildung verhindert wird, kann das Abströmen von ungenutzter Waschflüssigkeit minimiert werden, so daß gegenüber früher beträchtliche Mengen an Waschflüssigkeit eingespart werden können. Diese Einsparungen reduzieren nicht nur die Betriebskosten, sondern erleichtern auch die Entsorgung und tragen daher zum Umweltschutz bei. Darüber hinaus kann der gesamte Nutschvorgang erheblich verkürzt werden. Schließlich kann auch die Produktreinheit homogener und reproduzierbarer eingestellt werden. Desweiteren steht mit der exakten zeitlichen Erfassung des Eintritts von Flüssigkeitsspiegeln in einen Feststoffkuchen ein Verfahrensindikator zur Verfügung, der in Kombination mit einer Druck-, Konzentrations- und Kuchenhöhenmessung Rückschlüsse auf Produkteigenschaften wie z.B. Kuchenwiderstand, Korngröße, Porosität u.a. zuläßt.

Weitere in erster Linie konstruktive Vorteile liegen darin, daß die nach dem erfindungsgemäßen Verfahren arbeitenden Sensorköpfe als kompakte Einheiten nahezu an beliebigen Stellen vor allem auch nachträglich bei Anlagenbehältern oder Kesseln angebaut werden können. Dabei ist ohne weiteres eine explosionsschutzsichere Ausführung (z.B. EX-Zone 1 in Schutzart EEx ib II C T 4) verwendbar.

Im folgenden wird ein Ausführungsbeispiel der Erfindung anhand von Zeichnungen näher erläutert. Es zeigen:
- Fig. 1: eine Drucknutsche mit angebautem Flüssig-Fest-Sensor,
- Fig. 2: den Sensorkopf in perspektivischer Darstellung und
- Fig. 3: ein Blockschaltbild der Auswerteelektronik.

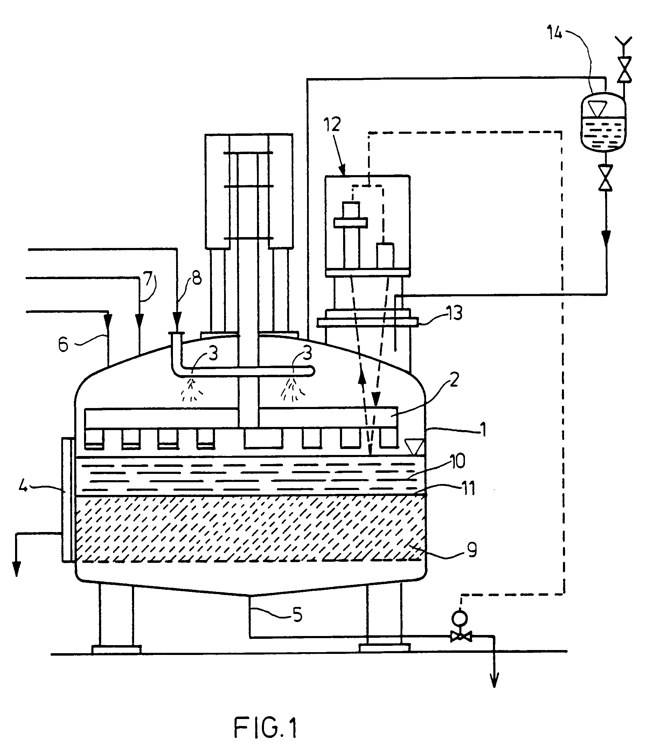

Die Drucknutsche gemäß Fig. 1 besteht aus einem Kessel 1, einem Rührwerk 2, Düsen 3 zum Aufsprühen einer Waschflüssigkeit, einem Austrag 4 für den Feststoff und einer Filtratableitung 5. Außerdem sind Zuführungen 6, 7 und 8 für ein Druckgas, die zu filtrierende Suspension und für die Waschflüssigkeit vorgesehen. Im unteren Teil des Kessel 1 befindet sich der auf einem Nutschenboden liegende Filterkuchen 9, der mit der Flüssigkeit 10 überschichtet ist. Die Flüssigkeit 10 kann hier die abzufiltrierende Mutterlauge oder eine Waschflüssigkeit sein.

Wie oben schon beschrieben, ist beim Abfiltrieren der Eintauchzeitpunkt der Flüssigkeit 10 in den Filterkuchen 9 verfahrenstechnisch von großer Bedeutung. Der Eintauchzeitpunkt ist dadurch charakterisiert, daß der Flüssigkeitsspiegel mit der Feststoffoberfläche 11 gerade zusammenfällt. Zur Erkennung des Durchgangs des Flüssigkeitsspiegels durch die Feststoffoberfläche 11 bei absinkendem Flüssigkeitsniveau oder der eben einsetzenden Überflutung der Feststoffoberfläche bei steigendem Flüssigkeitsniveau ist auf einem Schauglas seitlich über dem Kessel 1 ein Sensorkopf 12 angeordnet, dessen Funktion im folgenden näher beschrieben wird. An denselben Flansch 13 ist eine Tropfvorrichtung 14 angeschlossen, die lediglich aus einem Vorratsgefäß und Zuleitungen besteht.

Mit Hilfe der Tropfvorrichtung 14 werden Tropfen erzeugt, die auf die Oberfläche der Flüssigkeit 10 im Kessel 1 auftreffen. Dadurch werden periodisch Oberflächenwellen erzeugt, die sich über die Flüssigkeit 10 ausbreiten.

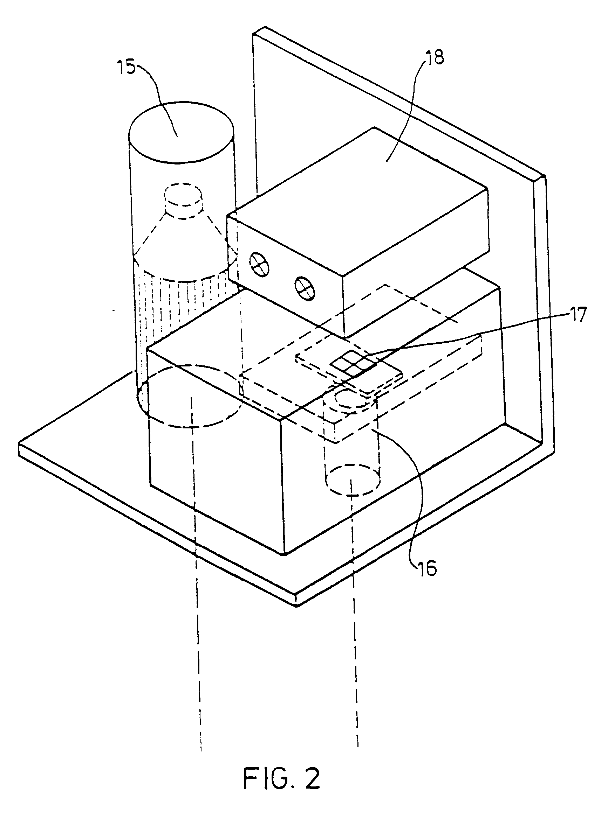

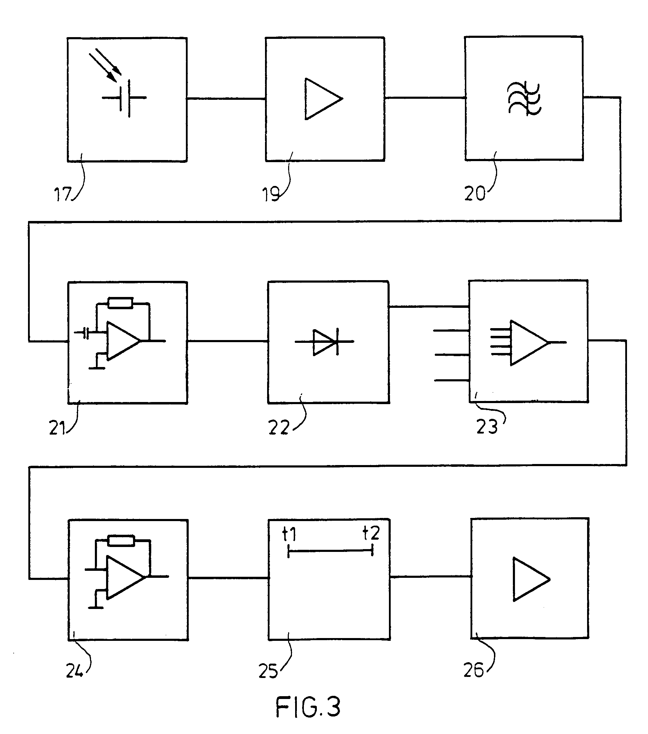

Der in Fig. 2 dargestellte Sensorkopf 12 besteht aus einer Lichtquelle 15 in druckfester Kapselung, einem Objektiv 16, das das reflektierte Licht der Lichtquelle 15 auf mehrere nebeneinander angeordnete Fotoempfänger 17 (Foto-array) abbildet und einer mit den Fotoempfängern verbundenen Auswerteelektronik 18. Die Funktion der Auswerteelektronik wird anhand von Fig. 3 beschrieben.

Durch die Fotoempfänger 17 wird das an der Flüssigkeitsoberfläche reflektierte Licht detektiert. Die Intensität des reflektierten Lichtstrahls ist durch Oberflächenwellen in der Flüssigkeit moduliert. Die Oberflächenwellen werden entweder durch die oben beschriebene Tropfvorrichtung 14 künstlich erzeugt oder entstehen bereits durch Vibrationen und mechanische Stöße, die erfahrungsgemäß bei chemischen Produktionsanlagen häufig durch anderweitig eingebaute Motoren oder Pumpen verursacht werden. Die Erfahrung hat gezeigt, daß es bei chemischen Anlagen eher umgekehrt ein Problem darstellen würde, wenn eine vollkommen ruhige Flüssigkeitsoberfläche gefordert würde. Die für die Funktion des Sensorverfahrens notwendigen Oberflächenwellen sind daher in der Praxis schon vorhanden und brauchen nur in Sonderfällen künstlich erzeugt werden.

Das an einem Fotoempfänger 17 anstehende Abtastsignal wird verstärkt (Vorverstärker 19), über einen Bandpaß 20 einem Differenzierglied 21 zugeführt und anschließend gleichgerichtet (Gleichrichter 22). Dabei ist jedem Fotoempfänger eine Schaltung 19, 20, 21, 22 zugeordnet, d.h. die fotoelektrischen Abtastsignale (4 Fotoempfänger gemäß Fig. 2) werden getrennt verstärkt, gefiltert, differenziert und anschließend gleichgerichtet. Durch die zeitliche Differentiation wird also nur die Wechsellichtkomponente erfaßt, die auf die Oberflächenwellen zurückzuführen ist. Dagegen wird das stets vorhandene Gleichlicht eliminiert.

Die gleichgerichteten Wechsellichtkomponenten werden anschließend durch eine Summierschaltung 23 aufsummiert und der Summenwert in einem Komparator 24 mit einem voreingestellten Schwellenwert verglichen. Der Komparator 24 gibt ein Steuersignal ab, wenn der eingestellte Schwellwert unter- bzw. überschritten wird. Zur Einstellung einer gegebenenfalls notwendigen zeitlichen Verzögerung ist dem Komparator 24 ein Verzögerungsglied 25 nachgeschaltet. Das verzögerte Steuersignal kann schließlich über einen Ausgangsverstärker 26 noch weiter verstärkt werden, um z.B. Ventile oder andere Stellglieder in den Zuleitungen 7 und 8 oder im Filtratablauf 5 zu betätigen.

Das hier beschriebene Sensorverfahren beruht auf dem Klassifikationsmerkmal, daß die an den Fotoempfängern 17 anstehenden Wechsellichtsignale beim Durchgang des Flüssigkeitsspiegels durch die Feststoffoberfläche oder bei deren Überflutung (bei steigendem Flüssigkeitsspiegel) eine maximale Änderung erfahren. Im Prinzip würde ein einziger Meßkanal mit einem Fotoempfänger 17 genügen. Eine größere Sicherheit wird jedoch erreicht, wenn, wie oben beschrieben, mit mehreren Fotoempfängern gearbeitet wird, deren Abtastsignale aufsummiert werden.

Das Sensorprinzip wurde hier in Verbindung mit dem Durchgang einer Flüssigkeitsoberfläche durch die Feststoffoberfläche in einer Drucknutsche beschrieben. Das erfindungsgemäße Verfahren kann aber auch anderweitig mit großem Erfolg eingesetzt werden. Bei einem Entleeren eines Kessels tritt z.B. häufig das Problem auf, daß ein bestimmter Flüssigkeitsspiegel nicht unterschritten werden darf oder der Auslaufzeitpunkt des Kessels genau erkannt werden muß. In diesem Fall wird in Höhe des kritischen Flüssigkeitsniveaus eine Platte eingebracht, die als Bezugsniveau dient. Sobald der Flüssigkeitsspiegel die im Abtastfeld der Fotoempfänger liegende Platte erreicht hat, ändert sich die Wechsellichtkomponente sprunghaft. So tritt z.B. bei ansteigendem Flüssigkeitsspiegel die Wechsellichtkomponente zum ersten Mal auf, wenn die Flüssigkeit die Platte gerade überflutet, während sie umgekehrt praktisch verschwindet, wenn bei fallendem Flüssigkeitsspiegel praktisch keine Flüssigkeit mehr auf der Platte vorhanden ist. Im Falle der vollständigen Entleerung des Kessels dient der Kesselboden als Bezugsniveau für die Flüssigkeit. Das beim Durchgang des Flüssigkeitsspiegels durch das Bezugsniveau erzeugte Steuersignal kann analog zu den oben beschriebenen Steuervorgängen, z.B. zum Abbruch eines Füll- bzw. Entleerungsvorganges, benutzt werden.

## Patentansprüche

1. Verfahren zur Erkennung des Ein- oder Auftauchpunktes eines festen oder porösen Körpers in oder aus einer Flüssigkeit, dadurch gekennzeichnet,
a) daß in der Flüssigkeit (10) Oberflächenwellen erzeugt werden,
b) daß die Flüssigkeitsoberfläche beleuchtet und das reflektierte Licht fotoelektrisch abgetastet wird,
c) daß nur die Wechsellichtkomponente des reflektierten Lichts erfaßt wird
d) und daß das gleichgerichtete Wechsellichtsignal mit einem voreingestellten Schwellenwert verglichen und bei Unter- oder Überschreitung des Schwellenwertes ein Steuersignal erzeugt wird.

2. Verfahren nach Anspruch 1, dadurch gekennzeichnet, daß das fotoelektrische Abtastsignal zur Erfassung der Wechsellichtkomponente differenziert wird.

3. Verfahren nach Anspruch 1 bis 2, dadurch gekennzeichnet, daß die Flüssigkeitsoberfläche an mehreren Stellen fotoelektrisch abgetastet und die entsprechenden gleichgerichteten Wechsellichtkomponenten aufsummiert werden und daß der Summenwert mit dem Schwellenwert verglichen wird.

4. Verfahren nach Anspruch 1 bis 3, dadurch gekennzeichnet, daß die Flüssigkeitsoberfläche durch auftreffende Tropfen in Schwingungen versetzt wird.

5. Verfahren nach Anspruch 1 bis 3, dadurch gekennzeichnet, daß die Flüssigkeitsoberfläche durch Anblasen in Schwingungen versetzt wird.

6. Verfahren nach Anspruch 1 bis 5, dadurch gekennzeichnet, daß die Oberfläche einer in einem Behälter angeordneten und im Abtastfeld (des) der Fotoempfänger(s) liegenden Platte als Bezugsniveau für die Flüssigkeit bei Füll- oder Entleervorgängen des Behälters verwendet wird und das bei der Überflutung der Plattenoberfläche auftretende Steuersignal zum Abbruch des Füll- bzw. Entleervorganges benutzt wird.

7. Verfahren nach Anspruch 1 bis 5, dadurch gekennzeichnet, daß beim Filtrieren einer Suspension das beim Durchgang des Flüssigkeitsspiegels durch die Filterkuchenoberfläche auftretende Steuersignal dazu benutzt wird, um den Filtratablauf zu unterbrechen, um anschließend eine Durchströmung des Filterkuchens mit Waschflüssigkeit einzuleiten.

8. Vorrichtung zur Verwendung beim Verfahren nach Anspruch 1 bis 7, mit einer Lichtquelle (15) zur Beleuchtung der Flüssigkeitsoberfläche, einem Objektiv (16) zur Abbildung der beleuchteten Oberfläche, mehreren Fotodetektoren (17) zur Erfassung des an der Flüssigkeitsoberfläche reflektierten Lichts, einer Auswerteschaltung (18) mit Differenziergliedern (21) zur zeitlichen Differentiation der an den Fotoempfängern (17) anstehenden Signale, den Fotoempfängern zugeordneten Gleichrichtern (22) mit einer Summationsschaltung (23) zur Bildung der Summe aller gleichgerichteten Fotoempfängersignale, und einer Komparatorschaltung (24), die ein Steuersignal abgibt, wenn die Summe der Fotoempfängersignale einen voreingestellten Schwellwert unter- oder überschreitet.

## Claims

1. A process for the detection of the immersion or emergence point of a solid or porous body in or from a liquid, characterized in that
a) surface waves are generated in the liquid (10),
b) the liquid surface is illuminated and the reflected light scanned photoelectrically,
c) only the alternating light component of the reflected light is recorded
d) and the rectified alternating light signal is compared with a preset threshold value and if the said signal falls below or above the threshold value a control signal is generated.

2. A process according to Claim 1, characterized in that the photoelectric scanning signal is differentiated to determine the alternating light component.

3. A process according to Claims 1 and 2, characterized in that the liquid surface is scanned photoelectrically at several places and the corresponding rectified alternating light components are added up and the resultant value compared with the threshold value.

4. A process according to Claims 1 to 3, characterized in that the liquid surface is caused to vibrate by incident drops.

5. A process according to Claims 1 to 3, characterized in that the liquid surface is caused to vibrate by blowing on it.

6. A process according to Claims 1 to 5, characterized in that the surface of a plate arranged in a vessel and situated in the scannable field of the photodetector(s) is used as reference level for the liquid during filling or emptying processes of the vessel and the control signal arising during the flooding of the plate surface is used for the termination of the filling or emptying process.

7. A process according to Claims 1 to 5, characterized in that during the filtration of a suspension the control signal arising during the passage of the liquid level through the filter cake surface is used to interrupt the filtrate discharge in order subsequently to initiate a flow of wash liquid through the filter cake.

8. A device for use during the process according to Claims 1 to 7, with a light source (15) for the illumination of the liquid surface, an objective (16) for forming an image of the illuminated surface, several photodetectors (17) for detecting the light reflected at the liquid surface, an evaluation circuit (18) with differentiating elements (21) for differentiating with respect to time the signals due to be dealt with at the photodetectors, rectifiers (22) assigned to the photodetectors with a summing circuit (23) for forming the sum of all rectified photodetector signals and a comparator circuit, that emits a control signal when the sum of the photodetector signals falls below or above a preset threshold value.

## Revendications

1. Procédé de détection de l'instant d'immersion ou d'émersion d'un corps solide ou poreux dans un liquide ou hors de ce liquide, procédé caractérisé par le fait,
a) que l'on produit dans le liquide (10) des ondes de surface,
b) que l'on éclaire la surface du liquide et que l'on explore par voie photo-électrique la lumière réfléchie,
c) que l'on ne saisit que les composantes alternées de la lumière réfléchie,
d) et que l'on compare le signal alterné de la lumière, redressé, avec une valeur de seuil prescrite et qu'en cas de dépassement, par valeur inférieure ou par valeur supérieure, de la valeur de seuil, on produit un signal de commande.

2. Procédé selon la revendication 1, caractérisé par le fait que l'on différentie le signal de détection photo-électrique pour la saisie des composantes alternées de la lumière.

3. Procédé selon les revendications 1 à 2, caractérisé par le fait que l'on explore la surface du liquide par voie photo-électrique en plusieurs endroits et que l'on totalise les composantes alternées redressées, de la lumière correspondantes et que l'on compare la valeur totalisée avec la valeur de seuil.

4. Procédé selon les revendications 1 à 3, caractérisé par le fait que l'on met en vibration la surface du liquide au moyen de gouttes qui y tombent.

5. Procédé selon les revendications 1 à 3, caractérisé par le fait que l'on met la surface du liquide en vibration en y soufflant.

6. Procédé selon la revendication 1 à 5, caractérisé par le fait que lors des processus de remplissage et de vidange d'un récipient, on emploie, comme niveau de référence pour le liquide, la surface d'une plaque disposée dans le récipient et placée dans le champ d'exploration du récepteur ou des récepteurs photo-électriques, et que l'on utilise le signal de commande produit lors de la submersion de la surface de la plaque pour interrompre le processus de remplissage ou de vidange.

7. Procédé selon les revendications 1 à 5, caractérisé par le fait que, lors de la filtration d'une suspension, on utilise le signal de commande produit lors du passage du niveau du liquide par la surface du tourteau de filtration pour interrompre l'écoulement du filtrat pour provoquer ensuite un écoulement de liquide de lavage sur la totalité du tourteau de filtration.

8. Dispositif pour la mise en oeuvre du procédé selon les revendications 1 à 7, équipé d'une source de lumière (15) pour éclairer la surface du liquide, d'un objectif (16) pour donner une image de la surface éclairée, de plusieurs photo-détecteurs (17) pour saisir la lumière réfléchie par la surface du liquide, d'un circuit de traitement (18), comprenant des éléments différentiateurs (21) pour différentier, en fonction du temps, les signaux apparaissant sur les photo-récepteurs (17), des redresseurs (22), correspondant aux photo-récepteurs, avec un circuit de totalisation (23) pour former le total de tous les signaux, redressés, des photo-récepteurs, et d'un circuit de comparaison (24) qui émet un signal de commande lorsque le total des signaux des photo-récepteurs dépasse, par valeur inférieure ou par valeur supérieure, une valeur de seuil prescrite.
